# EUROPÄISCHE PATENTSCHRIFT

(11) **EP 1 573 255 B1**
(45) Veröffentlichungstag und Bekanntmachung des Hinweises auf die Patenterteilung: **18.03.2009**
(21) Anmeldenummer: 02808242.8
(22) Anmeldetag: 17.12.2002
(51) Int. Cl.: F24F 13/02, F24F 6/12

(54) **LUFTKANALMODUL**
AIR DUCT MODULE
MODULE POUR CANALISATION D'AIR

(43) Veröffentlichungstag der Anmeldung: 14.09.2005
(73) Patentinhaber: Michelbach, Ludwig, 90513 Zirndorf (DE)
(72) Erfinder: Michelbach, Ludwig, 90513 Zirndorf (DE)
(74) Vertreter: Zech, Stefan Markus
(86) Internationale Anmeldenummer: PCT/EP2002/014406
(87) Internationale Veröffentlichungsnummer: WO 2004/055445

(56) Entgegenhaltungen:
- DE-A- 3 535 901
- FR-A- 2 395 061
- GB-A- 1 155 067
- US-A- 2 058 240
- US-A- 2 338 382
- US-A- 2 463 382
- US-A- 2 837 171
- US-A- 3 240 001
- US-A- 5 203 894
- US-A- 5 269 823
- US-A- 5 927 393
- PATENT ABSTRACTS OF JAPAN vol. 008, no. 216 (M-329), 3. Oktober 1984 (1984-10-03) -& JP 59 100326 A (HITACHI PLANT KENSETSU KK), 9. Juni 1984 (1984-06-09)

## Beschreibung

Die Erfindung betrifft ein Luftkanalmodul, ausgebildet zum Einsatz in den Querschnitt eines abstromseitigen Luftkanals einer Luftbefeuchtungseinrichtung.

Luftkanalmodule für andere Anwendungsbereiche sind beispielsweise bereits aus der US 5 927 393 oder der FR 2 395 061 bekannt.

Die US 1 408 631 offenbart beispielsweise einen Radiator bei Kraftfahrzeugen mit einem entsprechenden Luftkanalmodul, wobei dieser Radiator besonders wirkungsvoll Wärme an die Umgebungsluft überträgt.

Luftkanäle werden überwiegend für den Transport von Zuluft oder Abluft benötigt. Dabei hat die Zuluft stets gewünschte vorbestimmte Eigenschaften. In vielen Fällen wird die Temperatur der Zuluft vorgegeben, um einen Raum zu kühlen oder zu heizen. Weiterhin kann die Luftfeuchtigkeit der Zuluft vorgegeben sein, um in einem Raum ein bestimmtes Klima zu erzeugen. Ein Luftkanal stellt die Verbindung zwischen einer Heizung, Klimaanlage, Luftbefeuchtungseinrichtung oder dergleichen einerseits und dem mit der Zuluft zu versorgenden Raum andererseits bereit.

In Gegenden mit großen Temperaturunterschieden müssen Heizungen, Klimaanlagen, Luftbefeuchtungseinrichtungen und dergleichen ein besonders breites Leistungsspektrum aufweisen. In Extremfällen kann dies dazu führen, dass die Vorrichtungen nicht mehr ganz einwandfrei arbeiten. Beispielsweise könnte eine Heizung bei extrem niedrigen Temperaturen nicht mehr in der Lage sein, einen zu beheizenden Raum auf einer bestimmten Mindesttemperatur zu halten. Weiterhin kann eine Luftbefeuchtungseinrichtung unter ungünstigen Bedingungen Kondenswasser erzeugen, das sich im Luftkanal niederschlägt. Bei Vorrichtungen, die unter allen denkbaren klimatischen Bedingungen einwandfrei arbeiten, sind der konstruktive Aufwand und damit auch die Kosten sehr hoch.

Die US 2 068 080 beschreibt eine Vorrichtung zum Heizen, Kühlen, Befeuchten oder Entfeuchten von Luft. Diese Vorrichtung umfasst dabei auch eine Luftbefeuchtungseinrichtung mit einer Luftbefeuchtungseinheit.

Es ist daher Aufgabe der Erfindung, ein Modul für einen Luftkanal bereitzustellen, das die oben genannten Nachteile überwindet.

Diese Aufgabe wird durch den Gegenstand gemäß Schutzanspruch 1 gelöst. Erfindungsgemäß ist ein Modul für den Innenraum eines Luftkanals vorgesehen, das eine Vielzahl zueinander parallel angeordneter, im Wesentlichen identischer Flächenstücke aufweist, die in etwa parallel zur Richtung des Luftstroms ausgerichtet sind.

Dabei ist vorgesehen, dass die Flächenstücke wellenförmig, zickzack-förmig oder dergleichen ausgebildet sind. Dadurch wird deren Oberfläche bei gleichem Platzbedarf wesentlich vergrößert. Im Gegensatz zu senkrechten Flächenstücken ermöglichen die wellenförmigen oder zickzack-förmigen Flächenstücke für die daran haftenden Wasserpartikel eine längere Verweildauer im Luftstrom. Dies ermöglicht eine effektivere Nachverdunstung der Luftpartikel.

Weiterhin ist vorgesehen, dass sich der Wellenlauf der Flächenstücke senkrecht zur Richtung des Luftstroms erstreckt. Somit werden die wellenförmigen Flächenstücke dem Luftstrom derart ausgesetzt, dass der Strömungswiderstand der Flächenstücke minimiert wird. Dies trägt dazu bei, dass der Energieaufwand für die Gebläseeinrichtung oder dergleichen nicht oder nur unwesentlich erhöht werden muss.

Durch die Vielzahl der Flächenstücke wird eine sehr große Oberfläche bereitgestellt, die dem Luftstrom ausgesetzt wird. An dieser Oberfläche bleiben Wasserpartikel haften, die durch den Luftstrom transportiert werden. Dadurch bekommen diese Wasserpartikel eine zusätzliche Verdunstungsmöglichkeit. Dabei können insbesondere größere Wasserpartikel verdunsten, die ansonsten ohne das Modul im Luftkanal Kondenswasser bilden würden. Darüber hinaus ermöglicht die Vielzahl der Flächenstücke einen Wärmetausch zwischen dem Luftstrom und einem weiteren Medium, das mit dem Modul koppelbar oder gekoppelt ist.

Oben genannte Aufgabe wird weiterhin durch den Gegenstand gemäß Schutzanspruch 33 gelöst.

Insbesondere wird die Aufgabe durch die Verwendung eines Luftkanalmoduls in einer Luftbefeuchtungseinrichtung gelöst, wobei das Luftkanalmodul zum Einsatz in den Querschnitt eines abstromseitigen Luftkanals der Luftbefeuchtungseinrichtung ausgebildet ist und eine Vielzahl zueinander parallel angeordneter, im Wesentlichen identischer Flächenstücke, die in etwa parallel zur Richtung des Luftstroms ausgerichtet sind, und deren Ausdehnung in Richtung des Luftstroms wesentlich größer gewählt ist als die Beabstandung zweier benachbarter Flächenstücke aufweist, wobei die Flächenstücke wellenförmig ausgebildet sind oder die Flächenstücke im Querschnitt eine Zickzack-Form aufweist, wobei sich der Wellenlauf oder die Zickzack-Form der Flächenstücke senkrecht zur Richtung des Luftstroms erstreckt und wobei das Luftkanalmodul im Luftkanal der Luftbefeuchtungseinrichtung nachgeschaltet ist.

Vorzugsweise ist vorgesehen, dass die Flächenstücke im gesamten Querschnitt des Luftkanals gleichmäßig verteilt sind. Dadurch wird gewährleistet, dass die gesamte Luft im Kanal die Flächenstücke in ausreichender Nähe passiert. Die Wahrscheinlichkeit, dass ein größerer Wasserpartikel das Modul passiert, wird dadurch verringert.

Weiter vorzugsweise sind die Flächenstücke derart bemessen, dass auf der Fluidstrom abgewandten Seite des Moduls keine Wasserpartikel (Aerosole) mehr austreten. Es wird also eine derartige Nachverdunstung erzielt, dass das Befeuchtungsfluid, insbesondere das eingedüste Wasser vollständig im gasförmigen Zustand vom Luftstrom abgeführt wird. Die dadurch erzielte Vermeidung von Aerosol-Partikeln im Luftstrom abstromseitig des Moduls, d.h. in der einem Raum zugeführten, befeuchteten Luft verbessert die hygienischen Bedingungen ganz entscheidend. Bei herkömmlichen Luftbefeuchtungsanlagen werden Aerosol-Partikel mitgerissen, die zu Gesundheitsbeeinträchtigungen, insbesondere durch Mitnahme von Keimen oder zu Beschädigungen von Gerätschaften, Dokumenten, etc. führen können.

Außerdem ist vorgesehen, dass die Flächenstücke eine Translationssymmetrie bezüglich einer Achse senkrecht zum Wellenlauf aufweisen. Dies bedeutet, dass die in das Modul eindringende Luft stets geradlinig das Modul passieren kann. Die einzigen Hindernisse für den Luftstrom im Modul sind diejenigen Stirnseiten der Flächenstücke, die der Luftstromquelle zugewandt sind. Auch dies trägt dazu bei, dass der Strömungswiderstand des Moduls minimiert wird.

Insbesondere ist vorgesehen, dass durch die Flächenstücke im Wesentlichen in Luftrichtung gerichtete Strömungskanäle gebildet werden, wobei die durch die Flächenstücke gebildeten Wandungen der Strömungskanäle zumindest bereichsweise gegenüber der Vertikalen geneigt sind. Auch dies trägt zu einer längeren Verweildauer der Wasserpartikel auf den Flächenstücken bei. Damit sind die Wasserpartikel länger dem Luftstrom ausgesetzt, wodurch die Verdunstungsrate erhöht wird. Mit dieser Maßnahme wird das entstehende Kondenswasser minimiert.

In konstruktiver Hinsicht ist vorgesehen, dass benachbarte Flächenstücke miteinander punktweise verbunden sind. Dies ermöglicht einen einfachen und zügigen Herstellungsprozess für das Modul. Außerdem wirkt sich dies auch positiv für den Strömungswiderstand des Moduls aus.

Weiterhin ist vorgesehen, dass die Verbindungspunkte zweier benachbarter Flächenstücke bezüglich zur Richtung des Luftstroms versetzt angeordnet sind. Dies bewirkt kleinere Turbulenzen, was dazu führt, dass mehr Wasserpartikel auf den Flächenstücken haften bleiben.

Herstellungstechnisch kann vorgesehen sein, dass benachbarte Flächenstücke miteinander punktweise verklebt, verlötet, verschweißt oder dergleichen verbunden sind. Damit lässt sich das Modul einfach und zügig herstellen und weist weiterhin eine ausreichende Stabilität auf.

Vorzugsweise ist vorgesehen, dass die Flächenstücke im Wesentlichen gleichmäßig voneinander beabstandet sind. Damit wird einerseits die Oberfläche des Moduls maximiert und andererseits die Stabilität des Moduls optimiert.

Weiterhin kann vorgesehen sein, dass das Modul eine Auffangvorrichtung aufweist, die unterhalb der Flächenstücke angeordnet ist. Damit kann an den Flächenstücken in unerwünschten Betriebssituationen auftretendes Kondenswasser aufgefangen, gesammelt und aus dem Luftkanal entfernt werden.

Hinsichtlich der geometrischen Ausbildung des Moduls ist vorgesehen, dass das Modul in Richtung des Luftstroms eine Länge von 150 mm bis 1000 mm, vorzugsweise von 300 mm bis 500 mm aufweist. Eine solche Länge reicht einerseits aus, um die relativ großen Wasserpartikel nachzuverdunsten, und ist andererseits kurz genug, damit der Luftstrom wegen des Strömungswiderstandes nicht allzu stark beeinträchtigt wird.

Vorzugsweise ist das Modul für einen Luftstrom vorgesehen, dessen Strömungsgeschwindigkeit zwischen 2 m/s und 3 m/s, vorzugsweise etwa 2,5 m/s beträgt. Versuche haben gezeigt, dass bei diesen Geschwindigkeiten die gewünschten Effekte stets erreicht werden.

Hinsichtlich der Auswahl des Materials kann vorgesehen sein, dass die Flächenstücke aus Metall, vorzugsweise aus Kupfer hergestellt sind. Aus Metall bzw. Kupfer lassen sich besonders dünne Flächenstücke herstellen, deren Dicke gleichmäßig ausgebildet ist.

Weiterhin ist vorgesehen, dass die Dicke der Flächenstücke aus Metall zwischen 0,05 mm und 0,2 mm, vorzugsweise zwischen 0,1 mm und 0,15 mm beträgt. Eine derart geringe Dicke trägt dazu bei, dass das Modul eine besonders große Oberfläche aufweist. Weiterhin bewirkt dies einen besonders geringen Strömungswiderstand und ein geringes Gewicht des Moduls.

Alternativ kann hinsichtlich der. Auswahl des Materials vorgesehen sein, dass die Flächenstücke aus Kunststoff hergestellt sind. Damit wird ein kostengünstiges Material bereitgestellt, das leicht bearbeitbar ist. Damit lässt sich das Modul einfach und kostengünstig herstellen.

Dabei kann vorgesehen sein, dass die Dicke der Flächenstücke aus Kunststoff zwischen 0,3 mm und 1,0 mm, vorzugsweise zwischen 0,5 mm und 0,7 mm beträgt. Damit lässt sich ein Modul bereitstellen, das einerseits kostengünstig herstellbar ist und andererseits eine hinreichende Stabilität aufweist.

Hinsichtlich der Verwendung kann vorgesehen sein, dass das Modul im Luftkanal einer Luftbefeuchtungseinrichtung nachgeschaltet ist. Dabei kann das Modul als Nachverdunstungseinrichtung verwendet werden, um auch größere Wasserpartikel nachzuverdunsten. Üblicherweise werden durch die Luftbefeuchtungseinrichtung sehr kleine Wasserpartikel eingesprüht, die entweder sofort oder in einem nachgeschalteten Wärmetauscher verdunsten. Die dabei noch nicht verdunsteten, zumeist größeren Wasserpartikel können anschließend im nachgeschalteten Modul verdunstet werden.

Bei einer weiteren Ausführungsform kann vorgesehen sein, dass das Modul wenigstens eine Rohrleitung aufweist, die mit einem Kreislauf koppelbar ist. Damit ist das Modul in den Kreislauf einer Anlage integrierbar. Beispielsweise kann das Modul als Komponente bei einem thermodynamischen Kreisprozess verwendet werden. Die wenigstens eine Rohrleitung kann sowohl für flüssige als auch für gasförmige Medien vorgesehen sein. Ebenso kann die Rohrleitung für Flüssigkeiten vorgesehen sein, die Partikel fester Körper enthalten, deren Schmelzwärme nutzbar ist.

Vorzugsweise ist vorgesehen, dass das Modul eine Vielzahl von Rohrleitungen aufweist, die mit einem Kreislaufsystem koppelbar ist. Mit der Vielzahl von Rohrleitungen kann ein flüssiges oder gasförmiges Medium innerhalb des Moduls gleichmäßig verteilt werden.

Dabei kann vorgesehen sein, dass die Rohrleitungen parallel und/oder seriell miteinander verschaltet sind. Eine parallele Verschaltung ist beispielsweise dann vorteilhaft, wenn der Strömungswiderstand der Rohrleitungen möglichst gering sein soll.

Hinsichtlich der geometrischen Ausgestaltung des Moduls kann vorgesehen sein, dass die wesentlichen Abschnitte der Rohrleitungen sich in etwa senkrecht zur Hauptebene der Flächenstücke erstrecken. Dadurch wird die Oberfläche der Flächenstücke durch die Rohrleitungen nur unwesentlich verändert.

Weiterhin ist vorgesehen, dass die Rohrleitung vorzugsweise jedes Flächenstück wenigstens einmal durchdringt. Damit besteht die Möglichkeit, die Rohrleitung und die Flächenstücke sowohl mechanisch als auch thermisch miteinander zu koppeln. Durch die mechanische Kopplung der Rohrleitung und der Flächenstücke lässt sich das Modul mit konstruktiv geringem Aufwand relativ stabil ausbilden.

Weiterhin kann vorgesehen sein, dass die Rohrleitung mit mehreren, vorzugsweise allen Flächenstücken thermisch gekoppelt ist. Dies ermöglicht eine thermische Wechselwirkung zwischen dem Luftstrom einerseits und dem Medium in der Rohrleitung andererseits.

Bei einer speziellen Ausführungsform kann vorgesehen sein, dass das Modul wenigstens einen Zulauf aufweist, der mit den Rohrleitungen an deren einem Ende gekoppelt ist. Der Zulauf ermöglicht eine zentrale Zufuhr eines flüssigen oder gasförmigen Mediums zu den Rohrleitungen. Damit ist das Modul auf einfache Weise mit einem Kreislaufsystem koppelbar.

Weiterhin kann vorgesehen sein, dass das Modul wenigstens einen Ablauf aufweist, der mit den Rohrleitungen an deren anderem Ende gekoppelt ist. Der Ablauf trägt ebenfalls dazu bei, dass das Modul besonders einfach in ein Kreislaufsystem integrierbar ist.

Für die konkrete Ausgestaltung kann vorgesehen sein, dass zwischen dem Zulauf und den Rohrleitungen eine Verteilungseinrichtung geschaltet ist. Ebenso kann vorgesehen sein, dass zwischen den Rohrleitungen und dem Ablauf eine Sammeleinrichtung geschaltet ist. Damit lässt sich mit konstruktiv geringem Aufwand die Vielzahl der Rohrleitungen in einen Kreislauf integrieren.

Bei einer besonderen Ausführungsform kann vorgesehen sein, dass die Verteilungseinrichtung und die Sammeleinrichtung in etwa baugleich ausgebildet sind. Damit lässt sich das Modul derart symmetrisch ausgestalten, dass die Rohrleitungen zwischen dem Zulauf und dem Ablauf in beide Richtungen durchströmt werden können. Dies ist insbesondere dann vorteilhaft, wenn das Modul in einer Anlage verwendet wird, bei der mehrere Betriebsarten möglich sind. Mit einem derart symmetrisch ausgebildeten Modul ist ein Richtungswechsel in einem Kreislaufsystem ohne großen konstruktiven Aufwand möglich. Insbesondere sind weniger Ventile erforderlich als bei einem Modul, bei dem die Rohrleitungen nur in einer Richtung durchströmt werden können.

Das Modul kann auch in der Funktion eines Wärmetauschers verwendet werden. Es besteht beispielsweise die Möglichkeit, dem Luftstrom Wärme zuzuführen und dadurch auch die Verdunstung im Modul zu fördern. Außerdem kann das Modul auch ausschließlich zur Erwärmung des Luftstroms verwendet werden. Dadurch wird das Medium in der Rohrleitung abgekühlt, so dass dadurch weiterhin eine Kälterückgewinnung möglich ist. Somit kann das Modul in verschiedenen Jahreszeiten unterschiedliche Funktionen innehaben. Beispielsweise kann das Modul im Winter als Heizaggregat verwendet werden, um den Luftstrom zusätzlich zu erwärmen. Das selbe Modul kann im Sommer als Nachverdunster verwendet werden, um im Luftstrom verbliebene Wasserpartikel zu verdunsten.

Weiterhin kann vorgesehen sein, dass das Modul zur Kälterückgewinnung verwendet wird, wobei die Verdunstungsenthalpie der Wasserpartikel im Luftstrom genutzt wird. Durch die Verdunstung der Wasserpartikel wird dem Medium in der Rohrleitung Wärme entzogen, so dass dieses als Kühlmedium verwendbar ist.

Schließlich kann vorgesehen sein, dass die Flächenstücke im Querschnitt eine Zickzack-Form aufweisen. Dies stellt eine ebenfalls zweckmäßige Alternative zur Wellenform dar. Bei verschiedenen Herstellungsverfahren kann es vorteilhaft sein, wenn das Flächenstück im Querschnitt zickzackförmig ausgebildet ist. Auch andere geometrische Ausgestaltungen der Flächenstücke sind denkbar. Vorzugsweise sollen die Flächenstücke so ausgestaltet sein, dass deren Oberfläche von einer ebenen Fläche abweicht.

Weitere Merkmale, Vorteile und besondere Ausführungsformen der Erfindung sind Gegenstand der Unteransprüche.

Nachstehend wird die Erfindung anhand eines konkreten Ausführungsbeispiels unter Bezugnahme auf die beigefügten Zeichnungen näher erläutert.

Es zeigen:
- Fig. 1: einen Ausschnitt einer Vorderansicht einer ersten Ausführungsform der Erfindung;
- Fig. 2: eine schematische Seitenansicht des Moduls der Erfindung;
- Fig. 3: einen Ausschnitt einer Vorderansicht einer zweiten Ausführungs- form der Erfindung;
- Fig. 4: einen Ausschnitt einer Vorderansicht einer dritten Ausführungs- form der Erfindung;
- Fig. 5: eine Vorderansicht einer vierten Ausführungsform der Erfindung;
- Fig. 6: eine Seitenansicht der vierten Ausführungsform der Erfindung.

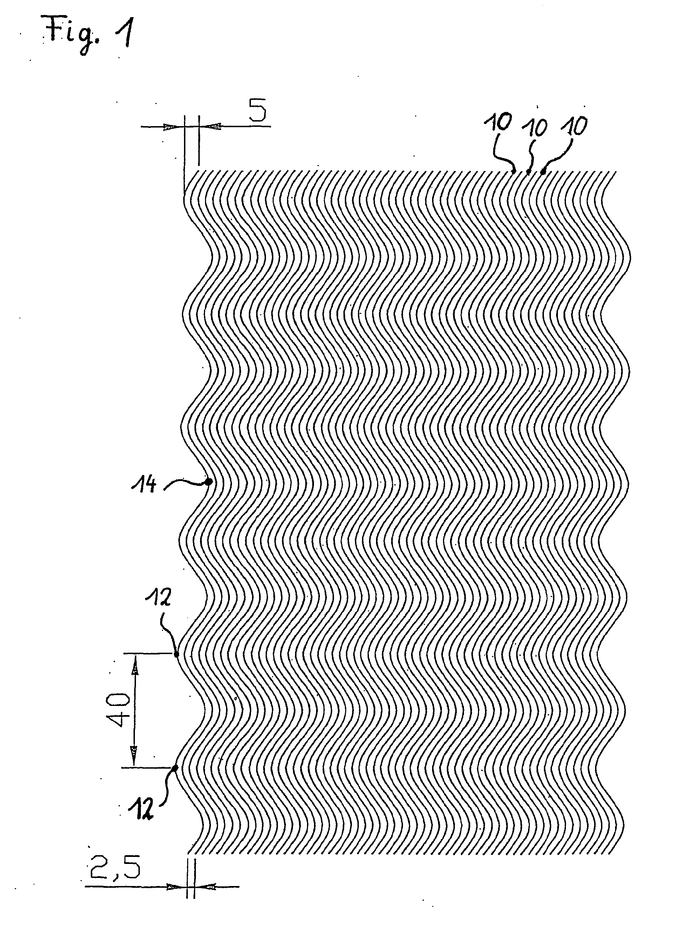

In Fig. 1 ist ein Ausschnitt einer ersten Ausführungsform eines erfindungsgemäßen Moduls in Vorderansicht dargestellt. Die Blickrichtung entspricht dabei der Richtung des Luftstroms. Das Modul umfasst eine Vielzahl Flächenstücke 10. Die Flächenstücke 10 sind im Wesentlichen identisch ausgebildet. Weiterhin sind die Flächenstücke 10 zueinander parallel angeordnet und in etwa gleichmäßig voneinander beabstandet. In diesem konkreten Ausführungsbeispiel beträgt der Abstand zwischen zwei benachbarten Flächenstücken 10 jeweils 2,5 mm. Die Flächenstücke 10 sind wellenförmig ausgebildet. Der Wellenlauf erstreckt sich senkrecht zur Richtung des Luftstroms.

Die Vielzahl der Flächenstücke 10 ist dabei so angeordnet, dass diejenige Querschnittsfläche, die sich dem Luftstrom entgegenstellt, minimiert wird. Zwischen dem Eingang und dem Ausgang des Moduls besteht somit eine Sichtverbindung. Weiterhin sind die Wellenberge 12 der Flächenstücke 10 gleichmäßig voneinander beabstandet. In diesem konkreten Beispiel beträgt der Abstand zweier benachbarter Wellenberge 12 eines Flächenstücks jeweils 40 mm. Auch die Amplituden sind bei jedem Wellenberg 12 des Flächenstücks 10 gleichmäßig ausgebildet. In diesem Ausführungsbeispiel beträgt die Amplitude bezüglich einer Mittelebene des Flächenstücks 10 jeweils 5 mm. Somit beträgt die Amplitude eines Wellenbergs 12 bezüglich zum Wellental 14 jeweils 10 mm.

Die Flächenstücke 10 sind punktweise miteinander verbunden. Dabei sind zwei benachbarte Flächenstücke 10 miteinander punktweise verschweißt, verklebt, verlötet oder anderweitig zusammengefügt. Vorzugsweise ist vorgesehen, dass diese Verbindungsstellen stets bezüglich zur Richtung des Luftstroms versetzt angeordnet sind.

Das Modul, das lediglich aus einer Vielzahl Flächenstücke 10 zusammengefügt ist, ist bereits einsatzfähig. Es ist in einen passenden Luftkanal integrierbar. Zusätzlich kann das Modul einen Rahmen aufweisen, der die Vielzahl der Flächenstücke 10 umschließt. Ein solcher Rahmen trägt zur Erhöhung der Stabilität des Moduls bei. Außerdem wird durch den Rahmen die Transportsicherheit des Moduls erhöht.

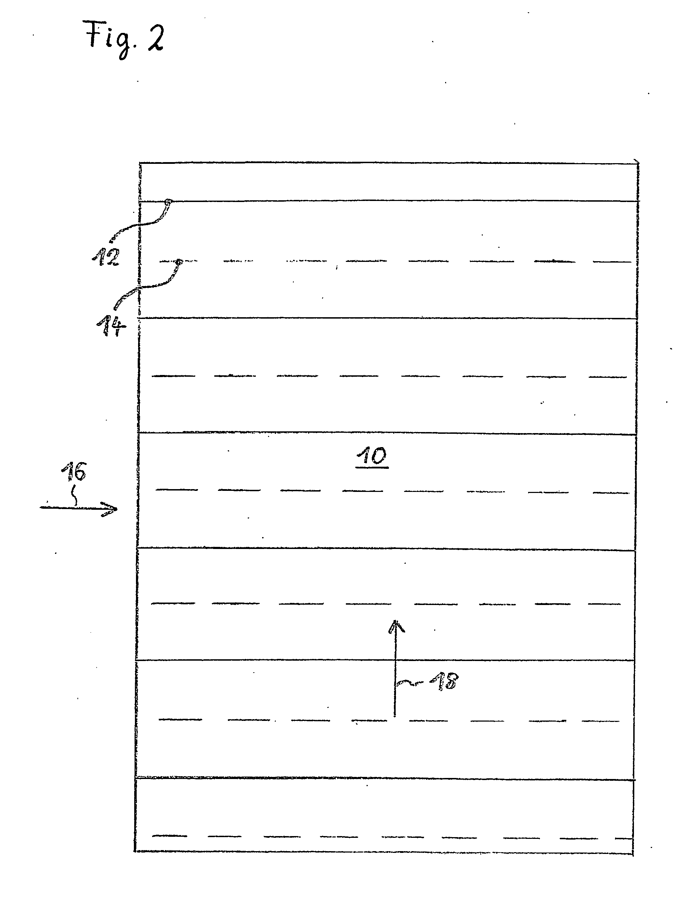

In Fig. 2 ist eine schematische Seitenansicht der bevorzugten Ausführungsform des Moduls dargestellt. Dabei wird ein an der Außenseite des Moduls liegendes Flächenstück 10 gezeigt. Die Zeichnung verdeutlicht die Position des Flächenstücks 10 und des Moduls bezüglich zur Richtung 16 des Luftstroms. Der Wellenlauf 18 erstreckt sich senkrecht zur Richtung 16 des Luftstroms. Somit erstrecken sich die Wellenberge 12 und die Wellentäler 14 in Richtung 16 des Luftstroms. In Richtung 16 des Luftstroms hat das Modul und somit das Flächenstück 10 ein Länge von 300 mm. Bei dieser Abmessung hat das Modul eine besonders effiziente Wirkung.

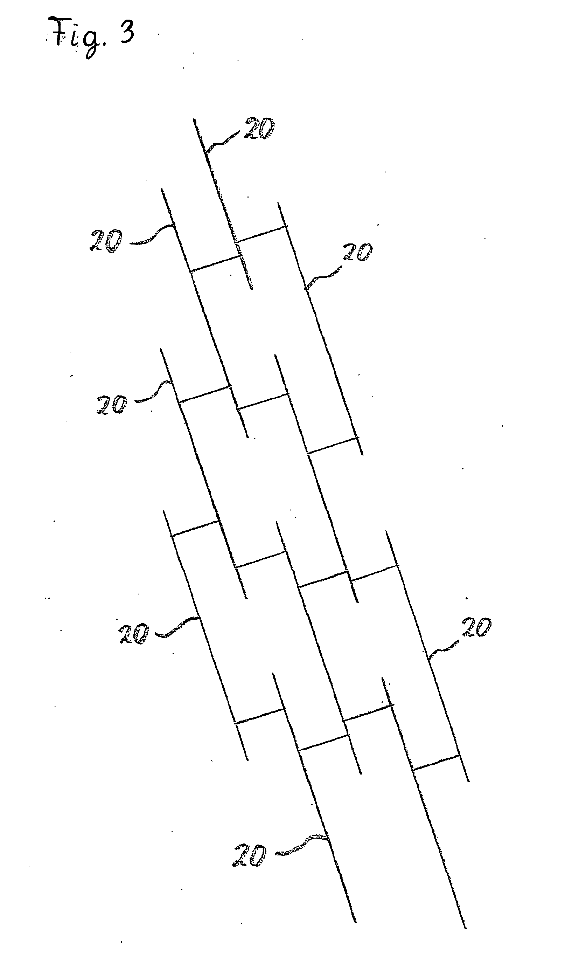

In Fig. 3 ist eine schematische Vorderansicht einer zweiten Ausführungsform des erfindungsgemäßen Moduls dargestellt. Die zweite Ausführungsform des Moduls umfasst eine Vielzahl ebener Flächenstücke 20. Die Flächenstücke 20 erstrecken sich in Strömungsrichtung über das gesamte Modul. Im Gegensatz zur ersten Ausführungsform erstrecken sich die Flächestücke 20 senkrecht zur Richtung des Luftstroms nur über einen Teilbereich des Durchmessers des Luftkanals. Die Flächenstücke 20 sind geneigt angeordnet. Die Flächenstücke 20 sind zueinander versetzt punktweise verbunden. Mehrere Flächenstücke 20 bilden zusammen ein in etwa mäanderförmiges Flächenstück, das jedoch zwischen zwei benachbarten Flächenstücken 20 einen Luftspalt aufweist. Bei dieser Ausführungsform sind benachbarte Kanäle, die zwischen den Flächenstücken 20 gebildet sind, miteinander verbunden. Darin unterscheidet sich die zweite Ausführungsform von der ersten Ausführungsform. Sowohl für den Luftstrom als auch für die Wasserpartikel sind Übergänge zwischen benachbarten Kanälen möglich. Die Wasserpartikel verweilen eine relativ lange Zeit an den Flächenstücken 20, da die Wasserpartikel über einen längeren Zeitraum an der Unterkante der Flächenstücke 20 verbleiben. Weiterhin werden die Wasserpartikel an der Unterkante der Flächenstücke 20 eher durch den Luftstrom mitgerissen, was die Nachverdunstung fördert.

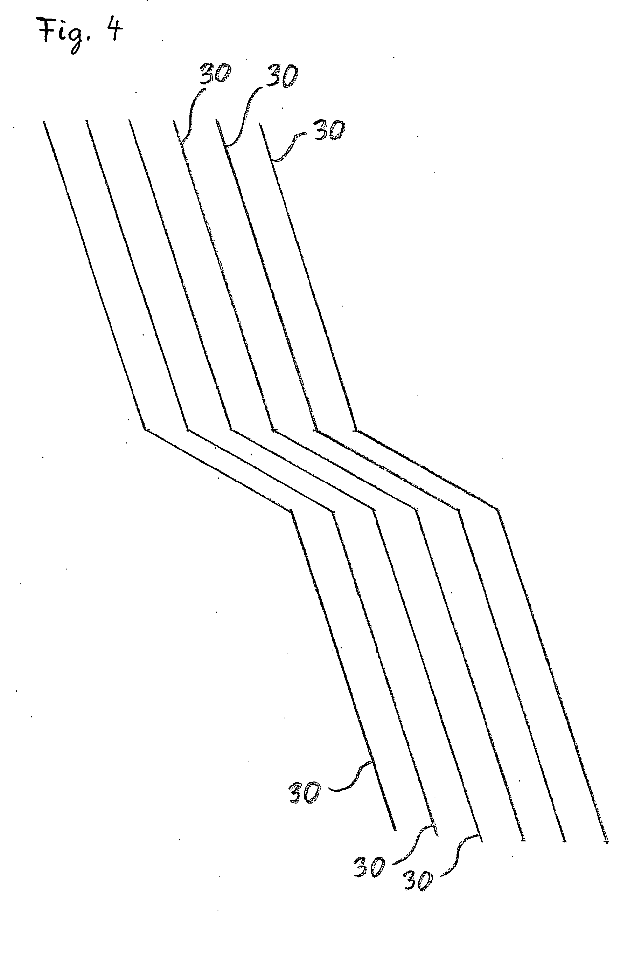

In Fig. 4 ist eine dritte Ausführungsform des erfindungsgemäßen Moduls schematisch dargestellt. Die Abbildung zeigt eine schematische Vorderansicht eines Moduls, dessen Flächenstücke 30 in etwa z-förmig ausgebildet sind. Der oberen und unteren Bereiche der Flächenstücke sind relativ leicht gegenüber der Vertikalen geneigt. Die mittleren Bereiche der Flächenstücke 30 sind dagegen etwas stärker zur Horizontalen hin geneigt. In dieser Ausführungsform ist die Verweildauer der Wasserpartikel im mittleren Bereich des Luftkanals aufgrund des flachen Anstellwinkels relativ hoch. In diesem mittleren Bereich ist ebenfalls die Strömungsgeschwindigkeit des Luftstroms relativ hoch, so dass dadurch die Nachverdunstung gefördert wird.

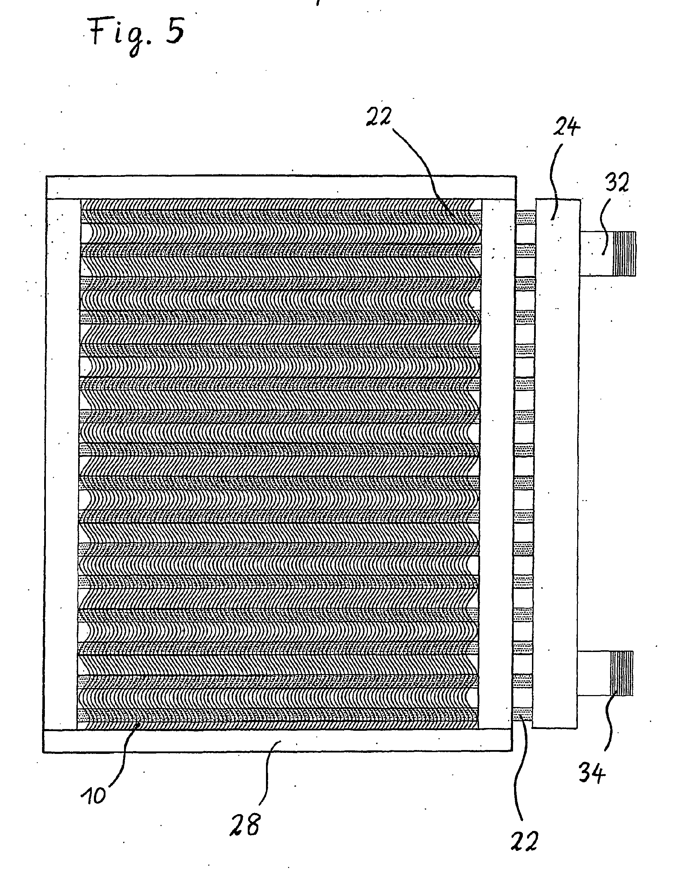

In Fig. 5 ist eine vierte Ausführungsform des erfindungsgemäßen Moduls in Vorderansicht dargestellt. Die Blickrichtung entspricht dabei der Richtung des Luftstroms. Das Modul umfasst eine Vielzahl Flächenstücke 10. Die Flächenstücke 10 sind ebenso wellenförmig ausgebildet wie bei der ersten Ausführungsform gemäß Fig. 1. Weiterhin sind die Flächenstücke 10 im Wesentlichen identisch ausgebildet und zueinander parallel angeordnet. In diesem konkreten. Ausführungsbeispiel beträgt der Abstand zwischen zwei benachbarten Flächenstücken 10 etwa 3 mm. Die Flächenstücke 10 sind in etwa gleichmäßig voneinander beabstandet. Der Wellenlauf der Flächenstücke 10 erstreckt sich senkrecht zur Richtung des Luftstroms. Dies bedeutet, dass die Querschnittsfläche der Flächenstücke 10, die sich dem Luftstrom entgegenstellt, minimiert wird. Die Vielzahl der Flächenstücke 10 ist von einem Rahmen 28 umgeben, dessen Querschnittsfläche senkrecht zur Luftstromrichtung ebenfalls minimiert ist.

Zusätzlich zu den oben beschriebenen Ausführungsformen umfasst die vierte Ausführungsform gemäß Fig. 5 eine Vielzahl von Rohrleitungen 22. Die Rohrleitungen 22 erstrecken sich senkrecht zur Hauptebene der Flächenstücke 10. Dabei durchdringen die Rohrleitungen 22 die Flächenstücke 10. Weiterhin erstrecken sich die Rohrleitungen 22 senkrecht zur Luftstromrichtung. Im seitlichen Bereich umfasst das Modul eine Verteilungseinrichtung 24, die mit sämtlichen Rohrleitungen 22 gekoppelt ist. Der Verteilungseinrichtung 24 ist ein Zulauf 32 zugeordnet, über den die Rohrleitungen 22 mit einem Kreislaufsystem koppelbar sind. Weiterhin weist das Modul eine Sammeleinrichtung 26 auf, die in Fig. 5 nicht dargestellt ist. Die Sammeleinrichtung 26 ist hinter der Verteilungseinrichtung 24 angeordnet. Der Sammeleinrichtung 26 ist ein Ablauf 34 zugeordnet. Die Verteilungseinrichtung 24 und die Sammeleinrichtung 26 sind baugleich ausgebildet. Jede der Rohrleitungen 22 verläuft von der Verteilungseinrichtung 24 zu der Sammeleinrichtung 26. Die langen Abschnitte jeder Rohrleitung 22 erstrecken sich dabei senkrecht zur Luftstromrichtung. Jede Rohrleitung 22 verläuft von der Verteilungseinrichtung 24 zum gegenüberliegenden Bereich des Rahmens 28. Jede Rohrleitung 22 weist mehrere U-förmige Biegungen auf, die in den Seitenteilen des Rahmens 28 angeordnet sind. Jede Rohrleitung 22 durchquert mehrere Male das Modul und endet in der Sammeleinrichtung 26. Die Rohrleitungen 22 verlaufen somit von der Verteilungseinrichtung 24 zur Sammeleinrichtung 26 und sind parallel miteinander verschaltet.

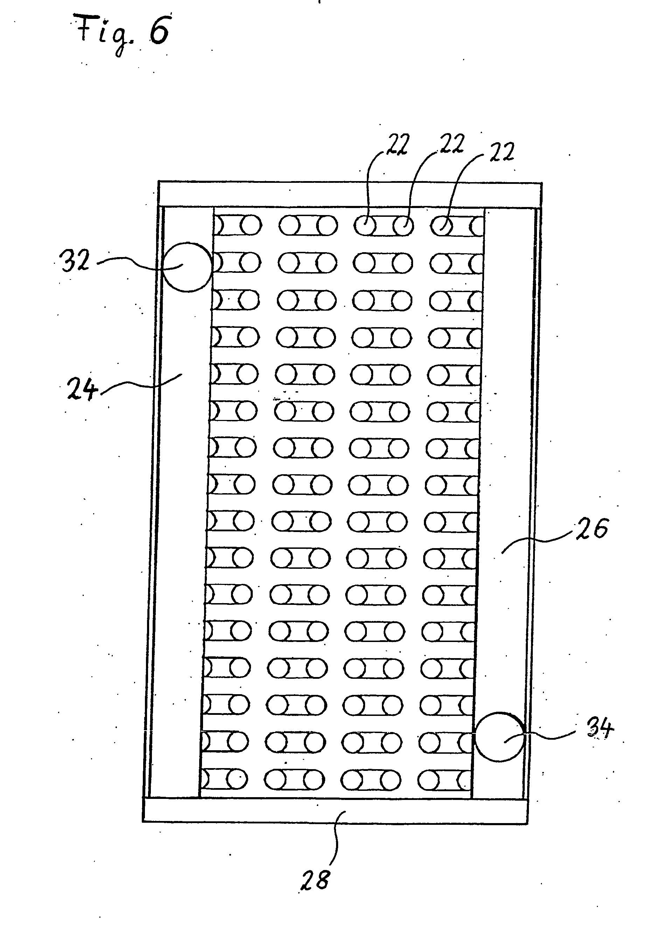

In Fig. 6 ist eine Seitenansicht der vierten Ausführungsform gemäß Fig. 5 dargestellt. Fig. 5 verdeutlicht insbesondere die Anordnung der Verteilungseinrichtung 24, der Sammeleinrichtung 26 und der Vielzahl der Rohrleitungen 22. Das Modul gemäß der vierten Ausführungsform weist insgesamt sechzehn Rohrleitungen 22 auf, von denen jede neun U-förmige Biegungen umfasst. Jede der Rohrleitungen 22 umfasst somit zehn geradlinige Abschnitte, die sich senkrecht zur Luftstromrichtung und auch senkrecht zur Hauptebene der Flächenstücke 10 erstrecken. Die Rohrleitungen 22 sind mit den Flächenstücken 10 sowohl mechanisch als auch thermisch gekoppelt. Das Modul kann somit als Wärmetauscher verwendet werden. Beispielsweise kann das Modul zur Erwärmung des Luftstroms vorgesehen sein. Ebenso kann das Modul zur Kälterückgewinnung verwendet werden. Weiterhin besteht die Möglichkeit, die Verdunstungsenthalpie der Wasserpartikel auf den Flächenstücken 10 zur Kälterückgewinnung zu nutzen.

Das Luftkanalmodul im Sinne dieser Erfindung ist nicht auf die oben beschriebenen Ausführungsformen beschränkt. Das erfindungsgemäße Luftkanalmodul kann beispielsweise auch Flächenstücke aufweisen, die geometrisch abweichend von den obigen ausgestaltet sind.

### Bezugszeichenliste

- 10: Flächenstück
- 12: Wellenberg
- 14: Wellental
- 16: Richtung des Luftstroms
- 18: Wellenlauf
- 20: Flächenstück
- 22: Rohrleitung
- 24: Verteilungseinrichtung
- 26: Sammeleinrichtung
- 30: Flächenstück
- 32: Zulauf
- 34: Ablauf

## Patentansprüche

1. Luftbefeuchtungseinrichtung umfassend ein Luftkanalmodul, ausgebildet zum Einsatz in den Querschnitt eines abstromseitigen Luftkanals der
Luftbefeuchtungseinrichtung, wobei das Luftkanalmodul eine Vielzahl zueinander parallel angeordneter, im Wesentlichen identischer Flächenstücke (10), die in etwa parallel zur Richtung (16) des Luftstroms ausgerichtet sind, und deren Ausdehnung in Richtung des Luftstroms wesentlich größer gewählt ist als die Beabstandung zweier benachbarter Flächenstücke (10) aufweist,
wobei die Flächenstücke (10) wellenförmig ausgebildet sind oder die Flächenstücke (10) im Querschnitt eine Zickzack-Form aufweisen, und
wobei sich der Wellenlauf (18) oder die Zickzack-Form der Flächenstücke (10) senkrecht zur Richtung (16) des Luftstroms erstreckt.

2. Luftbefeuchtungseinrichtung nach Anspruch 1,
**dadurch gekennzeichnet, dass**
die Flächenstücke (10) im gesamten Querschnitt des Luftkanals gleichmäßig verteilt sind.

3. Luftbefeuchtungseinrichtung nach Anspruch 1,
**dadurch gekennzeichnet, dass**
die Flächenstücke (10) eine Translationssymmetrie bezüglich einer Achse senkrecht zum Wellenlauf (18) aufweisen.

4. Luftbefeuchtungseinrichtung nach einem der Ansprüche 1 bis 3,
**dadurch gekennzeichnet, dass**
durch die Flächenstücke (10) im Wesentlichen in Luftrichtung gerichtete Strömungskanäle gebildet werden, wobei die durch die Flächenstücke (10) gebildeten Wandungen der Strömungskanäle zumindest bereichsweise gegenüber der Vertikalen geneigt sind.

5. Luftbefeuchtungseinrichtung nach einem der Ansprüche 1 bis 4,
**dadurch gekennzeichnet, dass**
benachbarte Flächenstücke (10) miteinander punktweise verbunden sind.

6. Luftbefeuchtungseinrichtung nach Anspruch 5,
**dadurch gekennzeichnet, dass**
die Verbindungspunkte zweier benachbarter Flächenstücke (10) bezüglich zur Richtung (16) des Luftstroms versetzt angeordnet sind.

7. Luftbefeuchtungseinrichtung nach Anspruch 5 oder 6,
**dadurch gekennzeichnet, dass**
benachbarte Flächenstücke (10) miteinander punktweise verklebt, verlötet, verschweißt oder dergleichen verbunden sind.

8. Luftbefeuchtungseinrichtung nach einem der Ansprüche 1 bis 7,
**dadurch gekennzeichnet, dass**
die Flächenstücke (10) im Wesentlichen gleichmäßig voneinander beabstandet sind.

9. Luftbefeuchtungseinrichtung nach einem der Ansprüche 1 bis 8,
**dadurch gekennzeichnet, dass**
das Modul eine Auffangvorrichtung aufweist, die unterhalb der Flächenstücke (10) angeordnet ist.

10. Luftbefeuchtungseinrichtung nach einem der Ansprüche 1 bis 9,
**dadurch gekennzeichnet, dass**
die Flächenstücke (10) in Längsrichtung des Moduls jeweils als durchgehende Fläche ausgebildet sind.

11. Luftbefeuchtungseinrichtung nach einem der Ansprüche 1 bis 10,
**dadurch gekennzeichnet, dass**
die Flächenstücke (10) sich im Wesentlichen über die gesamte Länge des Moduls erstrecken.

12. Luftbefeuchtungseinrichtung einem der Ansprüche 1 bis 11,
**dadurch gekennzeichnet, dass**
das Modul in Richtung (16) des Luftstroms eine Länge von 150 mm bis 1000 mm, vorzugsweise von 300 mm bis 500 mm aufweist.

13. Luftbefeuchtungseinrichtung nach einem der Ansprüche 1 bis 12,
**dadurch gekennzeichnet, dass**
das Modul für einen Luftstrom vorgesehen ist, dessen Strömungsgeschwindigkeit zwischen 2 m/s und 3 m/s, vorzugsweise etwa 2,5 m/s beträgt.

14. Luftbefeuchtungseinrichtung nach einem der Ansprüche 1 bis 13,
**dadurch gekennzeichnet, dass**
die Flächenstücke (10) aus Metall, vorzugsweise aus Kupfer hergestellt sind.

15. Luftbefeuchtungseinrichtung nach Anspruch 14,
**dadurch gekennzeichnet, dass**
die Dicke der Flächenstücke (10) aus Metall zwischen 0,05 mm und 0,2 mm, vorzugsweise zwischen 0,1 mm und 0,15 mm beträgt.

16. Luftbefeuchtungseinrichtung nach einem der Ansprüche 1 bis 13,
**dadurch gekennzeichnet, dass**
die Flächenstücke (10) aus Kunststoff hergestellt sind.

17. Luftbefeuchtungseinrichtung nach Anspruch 16,
**dadurch gekennzeichnet, dass**
die Dicke der Flächenstücke (10) aus Kunststoff zwischen 0,3 mm und 1,0 mm, vorzugsweise zwischen 0,5 mm und 0,7 mm beträgt.

18. Luftbefeuchtungseinrichtung nach einem der Ansprüche 1 bis 17,
**dadurch gekennzeichnet, dass**
das Modul wenigstens eine Rohrleitung (22) aufweist, die mit einem Kreislaufsystem koppelbar ist.

19. Luftbefeuchtungseinrichtung nach einem der Ansprüche 1 bis 18,
**dadurch gekennzeichnet, dass**
das Modul eine Vielzahl von Rohrleitungen (22) aufweist, die mit einem Kreislaufsystem koppelbar ist.

20. Luftbefeuchtungseinrichtung nach Anspruch 18 oder 19,
**dadurch gekennzeichnet, dass**
die Rohrleitungen (22) parallel und/oder seriell miteinander verschaltet sind.

21. Luftbefeuchtungseinrichtung nach einem der Ansprüche 18 bis 20,
**dadurch gekennzeichnet, dass**
die wesentlichen Abschnitte der Rohrleitungen (22) sich in etwa senkrecht zur Hauptebene der Flächenstücke (10) erstrecken.

22. Luftbefeuchtungseinrichtung nach einem der Ansprüche 18 bis 21,
**dadurch gekennzeichnet, dass**
die Rohrleitung (22) jedes Flächenstück (10) wenigstens einmal durchdringt.

23. Luftbefeuchtungseinrichtung nach einem der Ansprüche 18 bis 22,
**dadurch gekennzeichnet, dass**
die Rohrleitung (22) mit mehreren, vorzugsweise allen Flächenstücken (10) thermisch gekoppelt ist.

24. Luftbefeuchtungseinrichtung nach einem der Ansprüche 18 bis 23,
**dadurch gekennzeichnet, dass**
das Modul wenigstens einen Zulauf (32) aufweist, der mit den Rohrleitungen (22) an deren einem Ende gekoppelt ist.

25. Luftbefeuchtungseinrichtung nach einem der Ansprüche 18 bis 24,
**dadurch gekennzeichnet, dass**
das Modul wenigstens einen Ablauf (34) aufweist, der mit den Rohrleitungen (22) an deren anderem Ende gekoppelt ist.

26. Luftbefeuchtungseinrichtung nach Anspruch 24 oder 25,
**dadurch gekennzeichnet, dass**
zwischen dem Zulauf (32) und den Rohrleitungen (22) eine Verteilungseinrichtung (24) geschaltet ist.

27. Luftbefeuchtungseinrichtung nach einem der Ansprüche 18 bis 26,
**dadurch gekennzeichnet, dass**
zwischen den Rohrleitungen (22) und dem Ablauf (34) eine Sammeleinrichtung (26) geschaltet ist.

28. Luftbefeuchtungseinrichtung nach Anspruch 27,
**dadurch gekennzeichnet, dass**
die Verteilungseinrichtung (24) und die Sammeleinrichtung (26) in etwa baugleich ausgebildet sind.

29. Luftbefeuchtungseinrichtung nach Anspruch 28,
**dadurch gekennzeichnet, dass**
das Modul als Wärmetauscher ausgebildet ist.

30. Luftbefeuchtungseinrichtung nach Anspruch 28 oder 29,
**dadurch gekennzeichnet, dass**
das Modul zur Erwärmung des Luftstroms vorgesehen ist.

31. Luftbefeuchtungseinrichtung nach einem der Ansprüche 28 bis 30,
**dadurch gekennzeichnet, dass**
das Modul zur Kälterückgewinnung vorgesehen ist.

32. Luftbefeuchtungseinrichtung nach Anspruch 31,
**dadurch gekennzeichnet, dass**
die Verdunstungsenthalpie der Wasserpartikel zur Kälterückgewinnung vorgesehen ist.

33. Verwendung eines Luftkanalmoduls, in einer Luftbefeuchtungseinrichtung, wobei das Luftkanalmodul zum Einsatz in den Querschnitt eines abstromseitigen Luftkanals der Luftbefeuchtungseinrichtung ausgebildet ist und eine Vielzahl zueinander parallel angeordneter, im Wesentlichen identischer Flächenstücke (10), die in etwa parallel zur Richtung (16) des Luftstroms ausgerichtet sind, und deren Ausdehnung in Richtung des Luftstroms wesentlich größer gewählt ist als die Beabstandung zweier benachbarter Flächenstücke (10) aufweist,
wobei die Flächenstücke (10) wellenförmig ausgebildet sind oder die Flächenstücke (10) im Querschnitt eine Zickzack-Form aufweisen,
wobei sich der Wellenlauf (18) oder die Zickzack-Form der Flächenstücke (10) senkrecht zur Richtung (16) des Luftstroms erstreckt und wobei das Luftkanalmodul im Luftkanal der Luftbefeuchtungseinrichtung nachgeschaltet ist.

## Claims

1. An air humidification device comprising an air duct module configured for insertion into the cross-section of a downstream-side air duct of the air humidification device, wherein the air duct module comprises a plurality of essentially identical planar pieces (10) arranged in parallel to each other, which are oriented approximately parallel to the direction (16) of the air flow, and the extension of which, in the direction of the air flow, is selected to be essentially greater than the spacing of two adjacent planar pieces (10),
wherein the planar pieces (10) are configured to be corrugated or the planar pieces (10) have a zigzag shape in cross-section, and
wherein the corrugation (18) or the zigzag shape of the planar pieces (10) extends perpendicular to the direction (16) of the air flow.

2. The air humidification device according to claim 1,
**characterized in that**
the planar pieces (10) are evenly distributed through the entire cross-section of the air duct.

3. The air humidification device according to claim 1,
**characterized in that**
the planar pieces (10) have a translation symmetry relative to an axis perpendicular to the corrugation (18).

4. The air humidification device according to any one of claims 1 to 3,
**characterized in that**
the planar pieces (10) form flow ducts essentially directed into the air direction, wherein the walls of the flow ducts formed by the planar pieces (10) are inclined with respect to the vertical line at least in certain areas.

5. The air humidification device according to any one of claims 1 to 4,
**characterized in that**
adjacent planar pieces (10) are connected to one another at points.

6. The air humidification device according to claim 5,
**characterized in that**
the connection points of two adjacent planar pieces (10) are arranged to be offset relative to the direction (16) of the air flow.

7. The air humidification device according to claim 5 or 6,
**characterized in that**
adjacent planar pieces (10) are connected to one another at points by adhesion, soldering or welding or the like.

8. The air humidification device according to any one of claims 1 to 7, **characterized in that**
the planar pieces (10) are essentially evenly spaced from each other.

9. The air humidification device according to any one of claims 1 to 8,
**characterized in that**
the module has a collecting device arranged beneath the planar pieces (10).

10. The air humidification device according to any one of claims 1 to 9,
**characterized in that**
the planar pieces (10) are each configured as a continuous surface in the longitudinal direction of the module.

11. The air humidification device according to any one of claims 1 to 10,
**characterized in that**
the planar pieces (10) essentially extend over the entire length of the module.

12. The air humidification device according to any one of claims 1 to 11,
**characterized in that**
the module has a length of 150 mm to 1000 mm, preferably of 300 mm to 500 mm, in the direction (16) of the air flow.

13. The air humidification device according to any one of claims 1 to 12,
**characterized in that**
the module allows for an air flow, the flow rate of which is between 2 m/s and 3 m/s, preferably about 2.5 m/s.

14. The air humidification device according to any one of claims 1 to 13,
**characterized in that**
the planar pieces (10) are made of metal, preferably of copper.

15. The air humidification device according to claim 14,
**characterized in that**
the thickness of the planar pieces (10) of metal is between 0.05 mm and 0.2 mm, preferably between 0.1 mm and 0.15 mm.

16. The air humidification device according to any one of claims 1 to 13,
**characterized in that**
the planar pieces (10) are made of plastic.

17. The air humidification device according to claim 16,
**characterized in that**
the thickness of the planar pieces (10) of plastic is between 0.3 mm and 1.0 mm, preferably between 0.5 mm and 0.7 mm.

18. The air humidification device according to any one of claims 1 to 17,
**characterized in that**
the module has at least one duct (22), which can be coupled to a circulation system.

19. The air humidification device according to any one of claims 1 to 18,
**characterized in that**
the module has a plurality of ducts (22), which can be coupled to a circulation system.

20. The air humidification device according to claim 18 or 19,
**characterized in that**
the ducts (22) are interconnected in parallel and/or in series.

21. The air humidification device according to any one of claims 18 to 20,
**characterized in that**
the essential portions of the ducts (22) extend approximately perpendicular to the main plane of the planar pieces (10).

22. The air humidification device according to any one of claims 18 to 21,
**characterized in that**
the duct (22) passes through each planar piece (10) at least once.

23. The air humidification device according to any one of claims 18 to 22,
**characterized in that**
the duct (22) is thermally coupled with a plurality, preferably all, of the planar pieces (10).

24. The air humidification device according to any one of claims 18 to 23,
**characterized in that**
the module has at least one inlet (32) coupled to the ducts (22) at one end thereof.

25. The air humidification device according to any one of claims 18 to 24,
**characterized in that**
the module has at least one outlet (34) coupled to the ducts (22) at the other end thereof.

26. The air humidification device according to claim 24 or 25,
**characterized in that**
a distribution device (24) is connected between the inlet (32) and the ducts (22).

27. The air humidification device according to any one of claims 18 to 26,
**characterized in that**
a collecting device (26) is connected between the ducts (22) and the outlet (34).

28. The air humidification device according to claim 27,
**characterized in that**
the distribution device (24) and the collecting device (26) are configured to be approximately identical in construction.

29. The air humidification device according to claim 28,
**characterized in that**
the module is configured as a heat exchanger.

30. The air humidification device according to claim 28 or 29,
**characterized in that**
the module allows for heating of the air flow.

31. The air humidification device according to any one of claims 28 to 30,
**characterized in that**
the module allows for heat recovery on cooling.

32. The air humidification device according to claim 31,
**characterized in that**
the evaporation enthalpy of the water particles allows for the heat recovery on cooling.

33. Use of an air duct module in an air humidification device, wherein the air duct module is configured for insertion into the cross-section of a downstream-side air duct of the air humidification device and comprises a plurality of essentially identical planar pieces (10) arranged in parallel to each other, which are oriented approximately parallel to the direction (16) of the air flow, and the extension of which, in the direction of the air flow, is selected to be essentially greater than the spacing of two adjacent planar pieces (10),
wherein the planar pieces (10) are configured to be corrugated or the planar pieces (10) have a zigzag shape in cross-section, and
wherein the corrugation (18) or the zigzag shape of the planar pieces (10) extends perpendicular to the direction (16) of the air flow, and wherein the air duct module is connected downstream of the air humidification device in the air duct.

## Revendications

1. Dispositif d'humidification d'air comportant un module de conduit d'air conçu pour être mis en oeuvre dans la section d'un conduit d'air aval du dispositif d'humidification d'air, le module de conduit d'air présentant une multitude d'éléments surfaciques (10) parallèles entre eux et sensiblement identiques, alignés plus ou moins parallèlement au sens (16) du flux d'air, et dont l'étendue définie dans le sens du flux d'air est choisie nettement supérieure à l'écart entre deux éléments surfaciques (10) contigus,
les éléments surfaciques (10) étant de forme ondulée ou les éléments surfaciques (10) présentant en section transversale une forme en zigzag, et l'allure de l'ondulation (18) ou la forme en zigzag des éléments surfaciques (10) s'étendant perpendiculairement au sens (16) du flux d'air.

2. Dispositif d'humidification d'air selon la revendication 1,
**caractérisé en ce que**
les éléments surfaciques (10) sont répartis uniformément sur toute la section du conduit d'air.

3. Dispositif d'humidification d'air selon la revendication 1,
**caractérisé en ce que**
les éléments surfaciques (10) présentent une symétrie en translation par rapport à un axe perpendiculaire à l'allure de l'ondulation (18).

4. Dispositif d'humidification d'air selon l'une des revendications 1 à 3,
**caractérisé en ce que**
des conduits d'écoulement sensiblement orientés dans le sens de l'air sont formés par les éléments surfaciques (10), les parois des conduits d'écoulement formées par les éléments surfaciques (10) étant, au moins par portions, inclinées par rapport à la verticale.

5. Dispositif d'humidification d'air selon l'une des revendications 1 à 4,
**caractérisé en ce que**
les éléments surfaciques (10) contigus sont reliés entre eux par points.

6. Dispositif d'humidification d'air selon la revendication 5,
**caractérisé en ce que**
les points de liaison de deux éléments surfaciques (10) contigus sont disposés en décalage par rapport au sens (16) du flux d'air.

7. Dispositif d'humidification d'air selon la revendication 5 ou 6,
**caractérisé en ce que**
les éléments surfaciques (10) contigus sont collés, brasés, soudés ou semblablement reliés entre eux par points.

8. Dispositif d'humidification d'air selon l'une des revendications 1 à 7,
**caractérisé en ce que**
les éléments surfaciques (10) sont sensiblement équidistants les uns des autres.

9. Dispositif d'humidification d'air selon l'une des revendications 1 à 8,
**caractérisé en ce que**
le module présente un dispositif de rétention disposé sous les éléments surfaciques (10).

10. Dispositif d'humidification d'air selon l'une des revendications 1 à 9,
**caractérisé en ce que**
les éléments surfaciques (10) sont constitués chacun comme surface ininterrompue dans le sens longitudinal du module.

11. Dispositif d'humidification d'air selon l'une des revendications 1 à 10,
**caractérisé en ce que**
les éléments surfaciques (10) s'étendent sensiblement sur toute la longueur du module.

12. Dispositif d'humidification d'air selon l'une des revendications 1 à 11,
**caractérisé en ce que**
le module présente, dans le sens (16) du flux d'air, une longueur de 150 mm à 1000 mm, et de préférence de 300 mm à 500 mm.

13. Dispositif d'humidification d'air selon l'une des revendications 1 à 12,
**caractérisé en ce que**
le module est prévu pour un flux d'air dont la vitesse d'écoulement est comprise entre 2 m/s et 3 m/s, et est de préférence de l'ordre de 2,5 m/s.

14. Dispositif d'humidification d'air selon l'une des revendications 1 à 13,
**caractérisé en ce que**
les éléments surfaciques (10) sont fabriqués en métal, et de préférence en cuivre.

15. Dispositif d'humidification d'air selon la revendication 14,
**caractérisé en ce que**
l'épaisseur des éléments surfaciques (10) en métal est comprise entre 0,05 mm et 0,2 mm, et de préférence entre 0,1 mm et 0,15 mm.

16. Dispositif d'humidification d'air selon l'une des revendications 1 à 13,
**caractérisé en ce que**
les éléments surfaciques (10) sont fabriqués en matière plastique.

17. Dispositif d'humidification d'air selon la revendication 16,
**caractérisé en ce que**
l'épaisseur des éléments surfaciques (10) en matière plastique est comprise entre 0,3 mm et 1,0 mm, et de préférence entre 0,5 mm et 0,7 mm.

18. Dispositif d'humidification d'air selon l'une des revendications 1 à 17,
**caractérisé en ce que**
le module présente au moins une conduite (22) pouvant être couplée à un système à circulation.

19. Dispositif d'humidification d'air selon l'une des revendications 1 à 18,
**caractérisé en ce que**
le module présente une multitude de conduites (22) pouvant être couplées à un système à circulation.

20. Dispositif d'humidification d'air selon la revendication 18 ou 19,
**caractérisé en ce que**
les conduites (22) sont interconnectées en parallèle ou en série.

21. Dispositif d'humidification d'air selon l'une des revendications 18 à 20,
**caractérisé en ce que**
les principaux tronçons des conduites (22) s'étendent plus ou moins perpendiculairement au plan principal des éléments surfaciques (10).

22. Dispositif d'humidification d'air selon l'une des revendications 18 à 21,
**caractérisé en ce que**
la conduite (22) traverse au moins une fois chaque élément surfacique (10).

23. Dispositif d'humidification d'air selon l'une des revendications 18 à 22,
**caractérisé en ce que**
la conduite (22) est couplée thermiquement à plusieurs éléments surfaciques (10), et de préférence à tous.

24. Dispositif d'humidification d'air selon l'une des revendications 18 à 23,
**caractérisé en ce que**
le module présente au moins une arrivée (32) qui est couplée aux conduites (22) par l'une de leurs extrémités.

25. Dispositif d'humidification d'air selon l'une des revendications 18 à 24,
**caractérisé en ce que**
le module présente au moins un écoulement (34) qui est couplé aux conduites (22) par leur autre extrémité.

26. Dispositif d'humidification d'air selon la revendication 24 ou 25,
**caractérisé en ce que**
un dispositif de distribution (24) est interposé entre l'arrivée (32) et les conduites (22).

27. Dispositif d'humidification d'air selon l'une des revendications 18 à 26,
**caractérisé en ce que**
un dispositif de collecte (26) est interposé entre les conduites (22) et l'écoulement (34).

28. Dispositif d'humidification d'air selon la revendication 27,
**caractérisé en ce que**
le dispositif de distribution (24) et le dispositif de collecte (26) sont constitués d'une construction plus ou moins identique.

29. Dispositif d'humidification d'air selon la revendication 28,
**caractérisé en ce que**
le module est conçu comme échangeur de chaleur.

30. Dispositif d'humidification d'air selon la revendication 28 ou 29,
**caractérisé en ce que**
le module est prévu pour le réchauffage du flux d'air.

31. Dispositif d'humidification d'air selon l'une des revendications 28 à 30,
**caractérisé en ce que**
le module est prévu pour la récupération de froid.

32. Dispositif d'humidification d'air selon la revendications 31,
**caractérisé en ce que**
l'enthalpie d'évaporation des particules d'eau est prévue pour la récupération de froid.

33. Utilisation d'un module de conduit d'air, dans un dispositif d'humidification d'air, le module de conduit d'air étant conçu pour être mis en oeuvre dans la section d'un conduit d'air aval du dispositif d'humidification d'air et présentant une multitude d'éléments surfaciques (10) parallèles entre eux et sensiblement identiques, alignés plus ou moins parallèlement au sens (16) du flux d'air, et dont l'étendue définie dans le sens du flux d'air est choisie nettement supérieure à l'écart entre deux éléments surfaciques (10) contigus,
les éléments surfaciques (10) étant de forme ondulée ou les éléments surfaciques (10) présentant en section transversale une forme en zigzag,
l'allure de l'ondulation (18) ou la forme en zigzag des éléments surfaciques (10) s'étendant perpendiculairement au sens (16) du flux d'air et le module de conduit d'air étant disposé en aval dans le conduit d'air du dispositif d'humidification d'air.
